# EUROPEAN PATENT SPECIFICATION

(11) **EP 3 377 355 B1**
(45) Date of publication and mention of the grant of the patent: **01.07.2020**
(21) Application number: 16797875.8
(22) Date of filing: 16.11.2016
(51) Int. Cl.: B60K 15/03, B60K 13/04

(54) **TANK INCLUDING A CONNECTOR AND METHOD FOR CONNECTING AN ELECTRICAL DEVICE IN A TANK**
TANK MIT EINEM STECKVERBINDER UND VERFAHREN ZUM ANSCHLIESSEN EINER ELEKTRISCHEN VORRICHTUNG IN EINEM TANK
RÉSERVOIR COMPRENANT UN CONNECTEUR ET PROCÉDÉ POUR CONNECTER UN DISPOSITIF ÉLECTRIQUE DANS UN RÉSERVOIR

(30) Priority: 16.11.2015 EP 15306814
(43) Date of publication of application: 26.09.2018
(73) Proprietor: Plastic Omnium Advanced Innovation and Research, 1130 Bruxelles (BE)
(72) Inventor: LEONARD, Stéphane, 1090 Bruxelles (BE); JANNOT, Frédéric, 1470 Bousval (BE); BONZOM, Renaud, 1120 Bruxelles (BE)
(74) Representative: LLR
(86) International application number: PCT/EP2016/077858
(87) International publication number: WO 2017/085125

(56) References cited:
- DE-A1-102006 031 903
- DE-A1-102009 046 954
- US-A1- 2005 208 839

## Description

### Field of Invention

The field of the invention relates to the field of tanks with electrical devices, and in particular to vehicle tanks. Particular embodiments relate to a tank including an electrical device and a method for connecting an electrical device in a tank.

### Background

When an electrical cable or a data cable has to be mounted through a through-hole in a leak tight way, according to prior art solutions, use is made of an O-ring or glue which is arranged between the wall of the through-hole and the cable. A disadvantage of this solution is that O-rings tend to lose their good compression properties after aging. Consequently, the sealing is not ensured in the long term due to durability issues. Further, plastic parts tend to show creep if a constant stress is applied thereon. As a result, the O-ring will not be properly maintained in cases of constant stress.

A disadvantage of the glue is that the mounting is permanent.

Further, standard leak-tight electrical connectors exist. However, such electrical connectors have a costly mechanical locking mechanism and require a seal, usually a lip seal, between two mating connectors. In addition, in such standard leak-tight electrical connectors, each connected wire on the connector has typically its own wire seal. Such connectors have the drawback that the connector is costly, that there is a risk of seal damage, and that a high number of components are required for the locking mechanism of the mating connectors.

DE 10 2006 031 903 A1 describes a tank and a method for connecting an electrical device in a tank.

### Summary

The object of embodiments of the invention is to be able to connect electrical devices in a tank, such as a heater, a pump or a sensor, through a sealed interface in an improved manner.

According to a first aspect of the invention there is provided a tank as defined in claim 1.

A good seal can be obtained, such that a fluid in the tank cannot reach the at least one first electrically conductive contact element. The closed curve can have any shape, e.g. the shape of a ring, a rectangular shape, an oval shape, etc. Moreover, the closed curve can be part of a surface area extending around the at least one first electrically conductive contact element. By having a closed curve, there is obtained a sealing between an internal area of the tank and the at least one first electrically conductive contact element.

In an embodiment, the first plastic part is welded along a closed curve to the second plastic part of the second connector, around the at least one first and second electrically conductive contact elements. The first connector may then be coupled to the second connector inside the tank, such that the first and second connectors are located entirely within the tank. In such an embodiment, there may be provided a further first connector welded to an inner side of the tank or to an inner side of a mounting flange, which further first connector may have at least one cable connected to the second connector inside the tank. This will be useful when it is desirable to connect two electrical devices in series in a tank.

In an exemplary embodiment, the electrical device comprises at least one connection cable, and the at least one connection cable has an end which is sealingly integrated in the first plastic part, e.g. by overmoulding the first plastic part over an end of the connection cable. The at least one first electrically conductive contact element is electrically connected to the at least one connection wire of the at least one connection cable inside the first plastic part. This may be done e.g. by crimping an electrically conductive contact element on an end of a connection wire of a connection cable.

In an exemplary embodiment, the electrical device has two connection cables, and the first connector comprises two electrically conductive contact elements connected to the two respective connection cables inside the first plastic part.

In an exemplary embodiment, the at least one first or second electrically conductive contact element comprises at least one rigid connector pin, and the at least one second or first electrically conductive contact element comprises at least one rigid contact bus dimensioned for receiving the at least one connection pin. In other words, either the first connector or the second connector may be provided with at least one connector pin, and the corresponding second or first connector may then be provided with a corresponding contact element, typically a contact bus. In exemplary embodiments, both the first and the second electrically conductive contact elements may protrude outward of the first and second plastic part, respectively. In other embodiments, the first or the second contact element may be arranged in the plastic part of the respective connector. For example, a contact bus may be arranged in the plastic part of the connector.

In a preferred embodiment, the first and/or second connector is made by overmoulding a connection cable with molten plastic material. In an exemplary embodiment the overmoulding comprises: placing the cable between a first mould part comprising a first cavity and a second mould part comprising a second cavity, wherein the first and second cavity are designed for delimiting a volume which surrounds the cable; and injecting the plastic material around the cable whilst heating the wire or shortly after having heated the wire. Preferably the heating is performed by connecting the wire to an electrical power source outside of the mould formed by said first and second mould parts. Alternatively the heating may be performed by actively applying heat to the wire from outside the mould formed by said first and second mould parts.

In a preferred embodiment the overmoulding is such that a plastic sheath of the cable bonds to the plastic material, by fusing together the plastic sheath and the plastic material. Preferably the plastic sheath is made of a polymer material that is compatible with the plastic material in the sense that polymer entanglements can be created at the interface of the sheath and the plastic material. Preferably the plastic material is a thermoplastic material, and the sheath is made of a thermoplastic material. In a possible embodiment the sheath is made of polyamide material, e.g. PA66, and the plastic material is also made of a polyamide material. Optionally, the plastic material could be a polyethylene or polypropylene comprising an additive to ensure its compatibility with the material of the sheath. Such an overmoulding technique has been described in PCT/EP2015/051741, in the name of the applicant, published as WO 2015/114025 A1.

According to the invention, the first plastic part is adhered to the plastic portion inside the tank by welding. This is preferably hot plate welding, but may also be laser welding.

In an exemplary embodiment, the first plastic part comprises a first positioning element between the at least one first electrically conductive contact element and the closed curve, and the second plastic part comprises a second positioning element configured to cooperate with the first positioning element, such that the positioning of the second connector is guided by the first and second positioning elements. These positioning elements may be parts protruding outwardly from a coupling side of the first and second connector, around the first and second electrically conductive contact elements.

According to a second aspect of the invention, there is provided a method for connecting an electrical device in a tank as defined in claim 8.

According to the invention, the adhering is done by welding, e.g. hot plate welding or laser welding.

The skilled person understands that the invention is not limited to the provision of one first connector in a tank. More in particular, there may be provided two or more first connectors in the tank with associated second connectors. Also, the invention may be combined with other techniques, such as the technique described in PCT/EP2015/051741 (published as WO 2015/114025 A1). More in particular, a connection cable connected to a second connector inside the tank may be provided with an overmoulded plastic part which is welded in an opening in the tank.

In an exemplary embodiment, the first plastic connector is made by overmoulding a connection cable with plastic material, and by connecting the at least one first electrically conductive contact element to a connection wire of the connection cable.

Embodiments of the invention may be used in additive tanks, in particular tanks for diesel additives, such as urea tanks, in gasoline or diesel fuel tanks, in other fuel tanks, etc. The tank according to the invention is preferably made of plastic, that is to say made of a material comprising at least one synthetic resin polymer. In a preferred embodiment the tank is made of polyethylene. However, all types of plastic may be suitable. Particularly suitable are plastics that belong to the category of thermoplastics. The term "thermoplastic" is understood to mean any thermoplastic polymer, including thermoplastic elastomers, and blends thereof. The term "polymer" is understood to mean both homopolymers and copolymers (especially binary or ternary copolymers). Preferably, the tank also comprises a layer of a fuel- or additive-impermeable resin such as, for example, EVOH (a partially hydrolysed ethylene/vinyl acetate copolymer), e.g. an EVOH layer between two HDPE layers. Alternatively, the tank may be subjected to a surface treatment (fluorination or sulphonation) for the purpose of making it impermeable to the liquid/vapors inside the tank.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a cross-section of an exemplary embodiment of a tank comprising a first connector;
Figure 2 illustrates schematically a cross-section of the first connector of figure 1 coupled to a second connector;
Figure 3 illustrates schematically a cross-section of an example of a tank comprising a mounting flange with a first connector coupled to a second connector, this example not belonging to the invention;
Figure 4 illustrates schematically a cross-section of another exemplary embodiment of a tank comprising two heaters and a first connector coupled to a second connector, wherein both the first connector and the second connector are located inside the tank;
Figure 5 illustrates schematically a perspective view of an exemplary embodiment of a first connector and a second connector which can be coupled to each other;
Figure 6 illustrates schematically a perspective view of another exemplary embodiment of a first connector and a second connector which can be coupled to each other;
Figure 7 illustrates schematically a cross-section of an example of a tank comprising a first connector coupled to a second connector integrated in a frame, this example not belonging to the invention; and
Figures 8A-D illustrate schematically top views of a number of possible closed curves.

### Description of embodiments

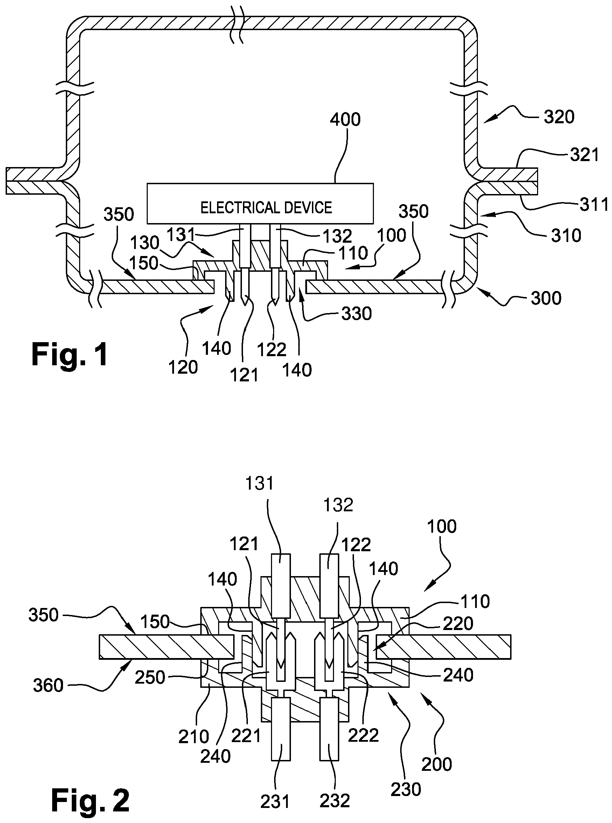

Figure 1 illustrates an exemplary embodiment of a tank 300 comprising a first connector 100 attached to an electrical device 400, e.g. a heater, a pump, a sensor, etc. The first connector 100 comprises a plastic part 110 and two electrically conductive contact elements 121, 122 protruding out of a coupling side 120 of the plastic part 110. The first electrically conductive contact elements 121, 122 are electrically connected with the electrical device 400 via cables 131, 132 which are integrated in the plastic part 110 of first connector 100, wherein the cables 131, 132 are electrically connected to the first electrically conductive contact elements 121, 122, respectively. First connector 100 is adapted to be coupled with a second connector 200, see figure 2. The second connector 200 comprises a second plastic part 210 and two second electrically conductive contact elements 221, 222 protruding out of a coupling side 220 of the second connector 200. The two second electrically conductive contact elements 221, 222 are configured for being coupled with the first electrically conductive contact elements 121, 122, respectively.

The first plastic part 110 is welded along a closed curve 150, e.g. along a ring surface, to a plastic portion inside the tank 300, here an inner side 350 of the tank surrounding a connector opening 330 in the tank 300. The closed curve 150 extends around, i.e. surrounds or includes, the first electrically conductive contact elements 121, 122. In a typical embodiment, the tank 300 comprises a first shell 310 and a second shell 320 which are welded along a circumferential flange 311, 321 to form the tank 300. The welding along the closed curve 150 of the first connector 100 may be performed before the first and second shells 310, 320 of tank 300 are welded. In an exemplary embodiment, the first connector 100 is welded to the inner side 350 of the tank by hot plate welding or by laser welding from the outside of the tank 300. In the latter case the tank is preferably manufactured from a material which is transparent for the laser radiation, whilst the first plastic part 110 is preferably manufactured from a plastic material configured to absorb heat, e.g. a black plastic material.

The first plastic part 110 is welded such that the electrically conductive contact elements 121, 122, protruding outward of the first plastic part 110, are accessible from the outside of the tank. More in particular, the first and second electrically conductive contact elements 121, 122 are protruding outwardly of the first plastic part 110 at a coupling side 120 of the first connector 100. At the other cable side 130 of the first connector 100, first and second cables 131, 132 power the electrical device 400. The connection cables 131, 132 have an end which is sealingly integrated in the first plastic part 110, and the two first electrically conductive contact elements 121, 122 are electrically connected inside the first plastic part 110 to the two connection wires of the two connection cables 131, 132.

The two electrical cables 131, 132 may have a plastic sheath made of a thermoplastic polymer material that is compatible with the thermoplastic material of the plastic part 110 in the sense that polymer entanglements are created at the interface of the sheath and the plastic material. The sheath may be made e.g. of a polyamide material, and the thermoplastic plastic material may be e.g. a compatible poly-ethylene material optionally comprising a compound for increasing the polarity (e.g. PE grafted with maleic anhydride, PRIEX®), a polyamide material or a compatible polypropylene material. A polyethylene, grafted with an extra high content of maleic anhydride has the advantage that the grafted maleic anhydride introduces polarity to the polymer achieving compatibility between polyolefins and more polar materials or polymers like EVOH or Polyamide. More generally, the skilled person understands that many compatible materials exist for the sheath and the plastic part. There exist tables showing plastic welding compatibility (see e.g. www.lpkfusa.com/lq from the laser welding company LPFK). Such welding compatibility tables also provide a good indication of the compatibility of two materials (sheath material and plastic material of part to be formed) that are being overmoulded.

Further, the first plastic part 110 of the first connector 100 comprises a first positioning element 140 at the coupling side 120, and the second plastic part 210 of the second connector 200 has a corresponding positioning element 240 at the coupling side 220. These first and second positioning elements 140, 240 may be e.g. cylindrical parts extending around the first and second contact elements 121, 122; 221, 222, and configured to cooperate in a telescopic manner. End parts of the positioning elements 140, 240 may be chamfered to further facilitate the guiding of the positioning elements 140, 240 with respect to each other.

Optionally, the second plastic portion 210 may be welded along a closed curve 250 to an outer side 360 of the tank 300. In that manner, the electrically conductive coupling portions 121, 122; 221, 222 will be sealed from the outside avoiding e.g. moist penetration between the coupling sides 120, 220 of the first and second connector 100, 200.

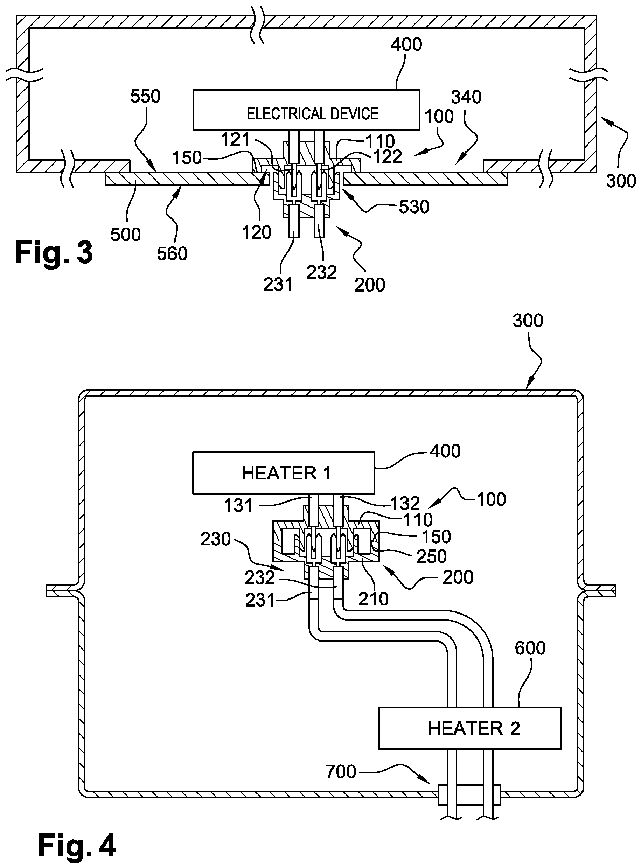

Figure 3 illustrates schematically an example not belonging to the invention. In this example, the tank 300 has a flange opening 340 which is closed by a mounting flange 500. In this example, the first connector 100 has a first plastic part 110 which is welded along a closed curve 150 to the inner side 550 of the flange 500, around a connector opening 530 in the mounting flange 500. In other words, the first connector 100 is welded to the immersed side of the mounting flange 500. The first electrically conductive contact elements 121, 122 protrude outwardly of a coupling side 120 of the first connector 100, through the connector opening 530 in the mounting flange 500. The first connector 100 may be identical to the first connector 100 of the first exemplary embodiment of figures 1 and 2, and may be connected in a similar manner to an electrical device 400. The second connector 200 is similar to the connector 200 of figure 2, with this difference that the second plastic part 210 is not welded to the outward side 560 of the flange 500. However, in an alternative example, the second connector 200 may be similar to the second connector 200 of figure 2, and may be welded to the outer side 560 of the mounting flange 500. In yet another non-illustrated example, there may be provided a cover over the second connector 200. Also, the second connector 200 may be part of an electronic unit mounted outside of the tank 300, e.g. on the outer side 560 of the mounting flange 500.

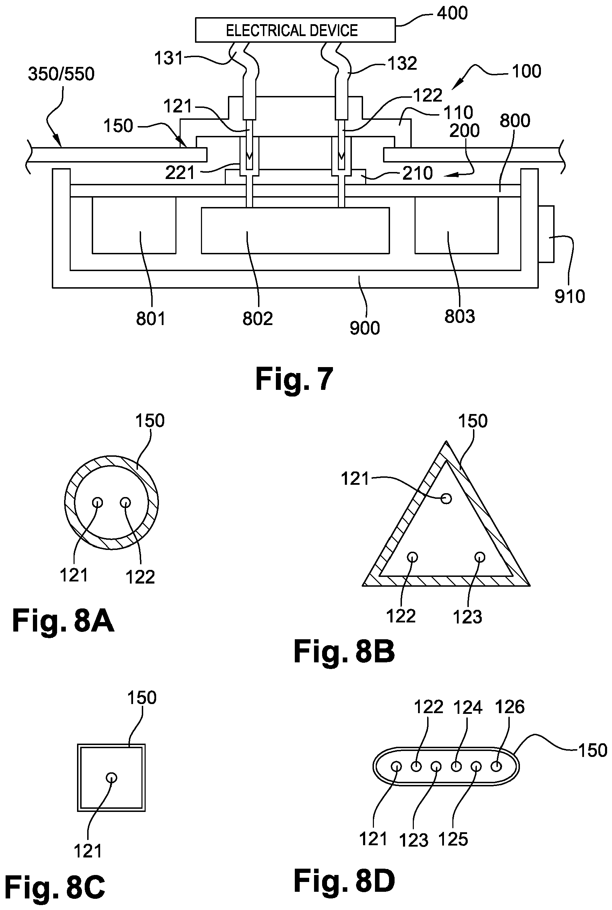

In a further developed example shown in figure 7 and not belonging to the invention, the second connector 200 is integrated in a frame 800 attached to a cover 900. More in particular the second plastic part 210 of second connector 200 may be an integrated part of frame 800. Frame 800 may be connected to cover 900 by any type of suitable means, e.g. a snap-fit connection. A number of components 801, 802, 803, e.g. electronic components such as sensor or control parts, may be attached to the frame 800 and/or to the cover 900. Further, there may be provided a third connector 910 at a side wall of the cover 900 connected directly or indirectly to the second connector 200. In this embodiment the first connector 100 may be welded to an inner side 350 of a tank wall as in the embodiment of figure 1 or may be welded to an inner side 550 of a mounting flange, as in the embodiment of figure 3.

Figure 4 illustrates schematically another exemplary embodiment of the invention. In this embodiment, the tank 300 comprises two heaters 400, 600. A first connector is connected to the first heater 400 in the same manner as described above for electrical device 400. The second connector 200 is similar to the second connector of figure 2. However, in the embodiment of figure 4, both the first and the second connector 100, 200 are located entirely within the tank 300, and an outer circumferential edge 150 of plastic part 110 of the first connector 100 is welded to an outer circumferential part 250 of second plastic part 210 of the second connector 200. The cables 231, 232 provided at the cable side 230 of the second connector 200 are an integral part of the second heater 600. In that way, the first and the second heater may be connected in series inside the tank. The connecting cables 231, 232 may be brought outside of the tank via any suitable cable connection piece 700. Also, there may be provided instead of connection piece 700, a further first and second connector 100, 200, as in the embodiment of figures 1 and 2 or figure 3. In other words, there may be provided a first connector 100 coupled to a second connector 200 entirely within the tank, as well as a first connector 100 welded to an inner side of the tank around a connector opening in the tank.

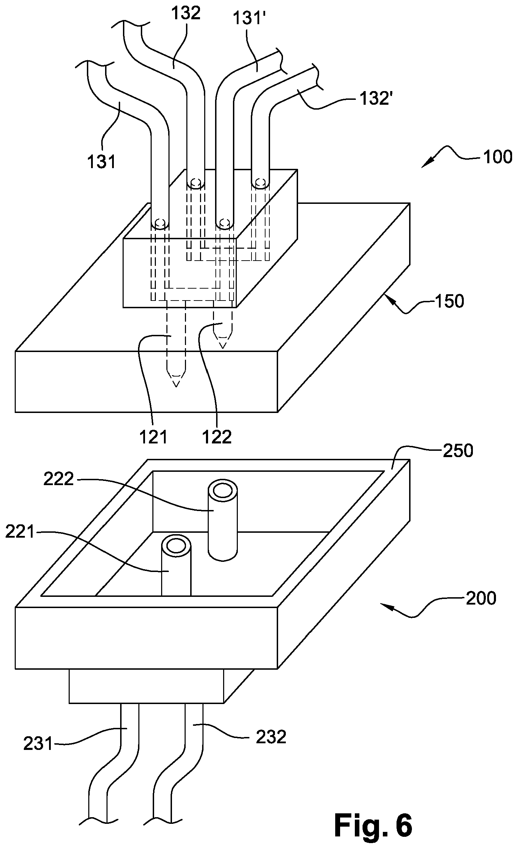

In other embodiments of the invention, there may be provided two heaters connected in parallel in the tank. This may be achieved e.g. by using the first and second connector 100, 200 of figure 6. The first connector 100 of figure 6 may be welded to an inner side of the tank, wherein connecting pins 121, 122 protrude outwardly of the tank. In this embodiment, the first connector 100 comprises four wire end parts of cables 131, 132, 131', 132'. A first wire 131 e.g. connected to the first heater, and a first wire 131' e.g. connected to the second heater are both connected to a first contact pin 121. Similarly, a second wire 132 e.g. connected to the first heater, and a second wire 132' e.g. connected to the second heater are both connected to a second contact pin 122. In that way, a first and second heater may be fed in parallel. Of course it is also possible to provide two first connectors 100, and two second connectors 200 in order to connect a first heater independently of a second heater.

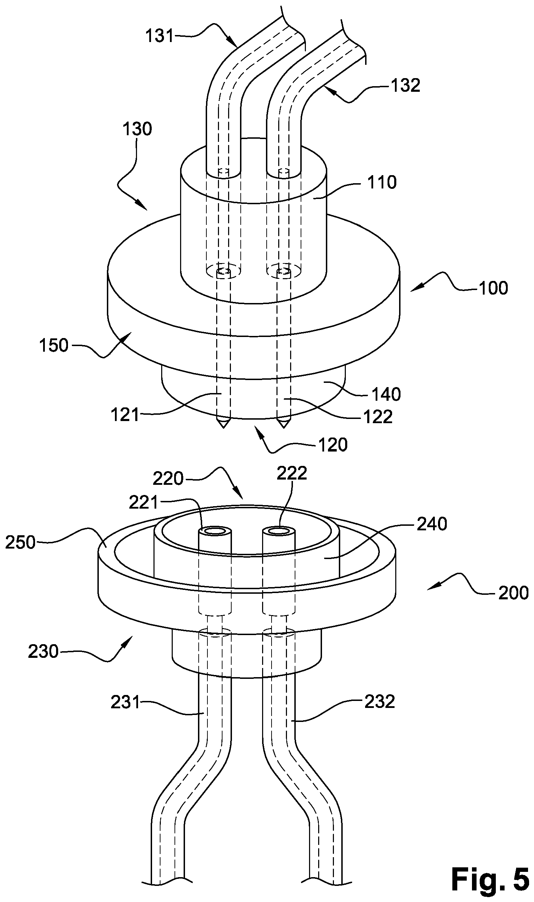

Figure 5 illustrates a perspective view of an exemplary embodiment of a first and second connector. In this embodiment, the first plastic part 110 of the first connector 100 is shaped with a plurality of cylindrical parts, and the second connector 200 is shaped correspondingly with a plurality of cylindrical parts. The skilled person understands that the invention is not limited to connectors with a cylindrical shape, and that other shapes are equally possible, see e.g. the embodiment of figure 6. The various components of the first and second connector 100, 200 have been discussed above in the various embodiments, and are not repeated.

The closed curve 150 may have various shapes as illustrated in figures 8A-8D. In a first exemplary embodiment the closed curve 150 is part of a ring shaped surface surrounding two electrically conductive contact elements 121, 122, as in figure 1. In a first exemplary embodiment the closed curve 150 is part of a triangular shaped surface surrounding three electrically conductive contact elements 121, 122, 123. In a third exemplary embodiment the closed curve 150 is a square surrounding one electrically conductive contact element 121. In a fourth exemplary embodiment the closed curve 150 is an oval surrounding six electrically conductive contact elements 121, 122, 123, 124, 125, 126.

Embodiments of the method of the invention allow obtaining a sealed interface for an electrical appliance arranged in a tank, e.g. in a urea tank, a diesel tank, a fuel tank, etc.

Whilst the principles of the invention have been set out above in connection with specific embodiments, it is to be understood that this description is merely made by way of example and not as a limitation of the scope of protection which is determined by the appended claims.

## Claims

1. A tank (300) comprising an electrical device (400) attached to a first connector (100), said first connector (100) being adapted for being coupled to a second connector (200), said first connector (100) comprising a first plastic part (110) and at least one first electrically conductive contact element (121, 122), said at least one first electrically conductive contact element (121, 122) being electrically connected with said electrical device (400), said second connector (200) comprising a second plastic part (210) and at least one second electrically conductive contact element (221, 222), said at least one second electrically conductive contact element (221, 222) being configured for being coupled with said at least one first electrically conductive contact element (121, 122), wherein said first plastic part (110) is welded along an outer circumferential edge, which is a closed curve (150) extending around the at least one first electrically conductive contact element (121, 122), to a plastic portion inside the tank (300),
**characterised in that** said second plastic part (210) comprises an outer circumferential edge (250) welded to:
- an outer side (360) of said tank (300) surrounding a connector opening (330); or
- the outer circumferential edge (150) of the first plastic part (110), the second plastic part (210) of the second connector (200) being the plastic portion inside the tank (300).

2. The tank (300) of claim 1, wherein the first plastic part (110) is welded along a closed curve to the second plastic part (210) of the second connector (200), around the at least one first (121, 122) and second (221, 222) electrically conductive contact element.

3. The tank (300) of claim 2, wherein said first connector (100) is coupled to said second connector (200) inside said tank (300), and said first (100) and second connector (200) are located entirely within the tank (300).

4. The tank (300) of any one of the previous claims, wherein the electrical device (400) comprises at least one connection cable (131, 132), wherein the at least one connection cable (131, 132) has an end which is sealingly integrated in the first plastic part (110), and wherein the at least one first electrically conductive contact element (121, 122) is electrically connected to at least one connection wire of the at least one connection cable (131, 132).

5. The tank (300) of any one of the previous claims, wherein the electrical device (400) has two connection cables (131, 132), and wherein the first connector (100) comprises two electrically conductive contact elements (121, 122) connected to said two connection cables (131, 132) inside the first plastic part (110).

6. The tank (300) of any one of the previous claims, wherein said at least one first (121, 122) or second (221, 222) electrically conductive contact element comprises at least one connector pin, and wherein said at least one second (221, 222) or first (121, 122) electrically conductive contact element comprises at least one contact bus dimensioned for receiving said at least one connector pin.

7. The tank (300) of any one of the previous claims, wherein the first plastic part (110) comprises a first positioning element (140) between the at least one first electrically conductive contact element (121, 122) and the closed curve (150), and the second plastic part (210) comprises a second positioning element (240) configured to cooperate with said first positioning element (140) such that the positioning of the second connector (200) is guided by the first (140) and second (240) positioning elements.

8. A method for connecting an electrical device (400) in a tank (300), comprising:
- providing said electrical device (400) with a first connector (100), said first connector (100) comprising a first plastic part (110) and at least one first electrically conductive contact element (121, 122) being electrically connected with said electrical device (400);
- assembling the tank (300) such that said first plastic part (110) is adhered along a closed curve (150) to a plastic portion inside the tank (300) and such that a second connector (200) is coupled with said first connector (100),
wherein said second connector (200) comprises a second plastic part (210) and at least one second electrically conductive contact element (221, 222), said at least one second electrically conductive contact element (221, 222) being coupled with said at least one first electrically conductive contact element (121, 122),
wherein the assembling is done such that said first plastic part (110) is welded along an outer circumferential edge (150), which is a closed curve extending around the at least one first electrically conductive contact element (121, 122), to the plastic portion inside the tank (300), and
**characterised in that** said second plastic part (210) comprises an outer circumferential edge (250) welded to:
- an outer side (360) of said tank (300) surrounding a connector opening (330); or
- the outer circumferential edge (150) of the first plastic part (110), the second plastic part (210) of the second connector (200) being the plastic portion inside the tank (300).

9. The method of claim 8, wherein the first plastic connector (100) is made by overmoulding a connection cable with the plastic material, and by connecting the at least one first electrically conductive contact element (121, 122) to a connection wire of the connection cable (131, 132).

10. The method of any one of the claims 8-9, wherein the assembling of the tank (300) comprises:
- adhering the first plastic part (110) along a closed curve to an inner side (350) of a first tank shell (310),
- adhering the first tank shell (310) to a second tank shell (320) such that a tank (300) enclosing the electrical device (400) is formed, and
- coupling the second connector (200) to the first connector (100).

## Patentansprüche

1. Tank (300), der eine elektrische Vorrichtung (400) umfasst, die an einem ersten Verbinder (100) angebracht ist, wobei der erste Verbinder (100) so ausgebildet ist, dass er mit einem zweiten Verbinder (200) koppelbar ist, wobei der erste Verbinder (100) ein erstes Kunststoffteil (110) und zumindest ein erstes elektrisch leitendes Kontaktelement (121, 122) umfasst, wobei das zumindest eine erste elektrisch leitende Kontaktelement (121, 122) elektrisch mit der elektrischen Vorrichtung (400) verbunden ist, wobei der zweite Verbinder (200) ein zweites Kunststoffteil (210) und zumindest ein zweites elektrisch leitendes Kontaktelement (221, 222) umfasst, wobei das zumindest eine zweite elektrisch leitende Kontaktelement (221, 222) so ausgebildet ist, dass es mit dem zumindest einen ersten elektrisch leitenden Kontaktelement (121, 122) koppelbar ist, wobei das erste Kunststoffteil (110) entlang einer äußeren Umfangskante geschweißt ist, bei der es sich um einen geschlossenen Rand (150) handelt, die sich um das zumindest eine erste elektrisch leitende Kontaktelement (121, 122) herum erstreckt, an einen Kunststoffabschnitt im Inneren des Tanks (300), **dadurch gekennzeichnet, dass**
das zweite Kunststoffteil (210) einen äußeren umlaufenden Rand (250) aufweist, der angeschweißt ist:
- an eine Außenseite (360) des Tanks (300), die eine Anschlussöffnung (330) umgibt; oder
- am äußeren Umfangsrand (150) des ersten Kunststoffteils (110), wobei das zweite Kunststoffteil (210) des zweiten Verbindungsstücks (200) der Kunststoffabschnitt im Inneren des Tanks (300) ist.

2. Tank (300) nach Anspruch 1, wobei der erste Kunststoffteil (110) entlang einer geschlossenen Kurve mit dem zweiten Kunststoffteil (210) des zweiten Verbinders (200) um das zumindest eine erste (121, 122) und zweite (221, 222) elektrisch leitende Kontaktelement herum verschweißt ist.

3. Tank (300) nach Anspruch 2, wobei der erste Verbinder (100) mit dem zweiten Verbinder (200) innerhalb des Tanks (300) gekoppelt ist und der erste (100) und der zweite Verbinder (200) vollständig innerhalb des Tanks (300) angeordnet sind.

4. Tank (300) nach einem der vorhergehenden Ansprüche, wobei die elektrische Vorrichtung (400) zumindest ein Verbindungskabel (131, 132) umfasst, wobei das zumindest eine Verbindungskabel (131, 132) ein Ende aufweist, das abdichtend in das erste Kunststoffteil (110) integriert ist, und wobei das zumindest eine erste elektrisch leitende Kontaktelement (121, 122) elektrisch mit zumindest einem Verbindungsdraht des zumindest einen Verbindungskabels (131, 132) verbunden ist.

5. Tank (300) nach einem der vorhergehenden Ansprüche, wobei die elektrische Vorrichtung (400) zwei Verbindungskabel (131, 132) umfasst, und wobei der erste Verbinder (100) zwei elektrisch leitende Kontaktelemente (121, 122) umfasst, die mit den zwei Verbindungskabeln (131, 132) im Inneren des ersten Kunststoffteils (110) verbunden sind.

6. Tank (300) nach einem der vorhergehenden Ansprüche, wobei das zumindest eine erste (121, 122) oder zweite (221, 222) elektrisch leitende Kontaktelement zumindest einen Verbindungsstift umfasst, und wobei das zumindest eine zweite (221, 222) oder erste (121, 122) elektrisch leitende Kontaktelement zumindest einen Kontaktbus umfasst, der zur Aufnahme des zumindest einen Verbindungsstiftes dimensioniert ist.

7. Tank (300) nach einem der vorstehenden Ansprüche, wobei das erste Kunststoffteil (110) ein erstes Positionierungselement (140) zwischen dem zumindest einen ersten elektrisch leitenden Kontaktelement (121, 122) und der geschlossene Rand (150) umfasst, und das zweite Kunststoffteil (210) ein zweites Positionierungselement (240) umfasst, das so ausgebildet ist, dass es mit dem ersten Positionierungselement (140) derart zusammenwirkt, dass die Positionierung des zweiten Verbinders (200) durch das erste (140) und das zweite (240) Positionierungselement geführt wird.

8. Verfahren zum Anschließen einer elektrischen Vorrichtung (400) in einem Tank (300), umfassend:
- Bereitstellen der elektrischen Vorrichtung (400) mit einem ersten Verbinder (100), wobei der erste Verbinder (100) ein erstes Kunststoffteil (110) und zumindest ein erstes elektrisch leitendes Kontaktelement 20 (121, 122) umfasst, das elektrisch mit der elektrischen Vorrichtung (400) verbunden ist;
- Zusammenbau des Tanks (300), so dass das erste Kunststoffteil (110) entlang eines geschlossenen Rands (150) an einen Kunststoffabschnitt im Inneren des Tanks (300) geklebt wird und dass ein zweiter Verbinder (200) mit dem ersten Verbinder (100) gekoppelt wird, wobei der zweite Verbinder (200) ein zweites Kunststoffteil (210) und zumindest ein zweites elektrisch leitendes Kontaktelement (221, 222) umfasst, wobei das zumindest eine zweite elektrisch leitende Kontaktelement (221, 222), wobei mit dem zumindest einen ersten elektrisch leitenden Kontaktelement (121, 122) gekoppelt ist, wobei der Zusammenbau so erfolgt, dass das erste Kunststoffteil (110) entlang eines äußeren Rands (150), bei der es sich um eine geschlossene Kurve handelt, die sich um das zumindest eine erste elektrisch leitende Kontaktelement (121, 122) herum erstreckt, an den Kunststoffabschnitt im Inneren des Tanks (300) geschweißt wird, und
**dadurch gekennzeichnet, dass**
das zweite Kunststoffteil (210) einen äußeren umlaufenden Rand (250) aufweist, an den es angeschweißt ist:
- an einer Außenseite (360) des Tanks (300), die eine Anschlussöffnung (330) umgibt; oder
- am äußeren Umfangsrand (150) des ersten Kunststoffteils (110), wobei das zweite Kunststoffteil (210) des zweiten Anschlusses (200) der Kunststoffabschnitt im Inneren des Tanks (300) ist.

9. Verfahren nach Anspruch 8, wobei der erste Kunststoffverbinder (100) durch Umspritzen eines Verbindungskabels mit dem Kunststoffmaterial und durch Verbinden des zumindest einen ersten elektrisch leitenden Kontaktelements (121, 122) mit einem Verbindungsdraht des Verbindungskabels (131, 132) hergestellt wird.

10. Verfahren nach einem der Ansprüche 8-9, wobei der Zusammenbau des Tanks (300) umfasst:
- Kleben des ersten Kunststoffteils (110) entlang einer geschlossenen Kurve an eine Innenseite (350) einer ersten Tankhülle (310),
- Anbringen der ersten Tankhülle (310) an einer zweiten Tankhülle (320), so dass ein die elektrische Vorrichtung (400) umschließender Tank (300) gebildet wird, und
- Kopplung des zweiten Anschlusses (200) mit dem ersten Anschluss (100).

## Revendications

1. Un réservoir (300) comprenant un dispositif électrique (400) fixé à un premier connecteur (100), ledit premier connecteur (100) étant adapté pour être relié à un deuxième connecteur (200), ledit premier connecteur (100) comprenant une première pièce (110) en matière plastique et au moins un premier élément de contact (121, 122) électriquement conducteur, ledit au moins un premier élément de contact (121, 122) électriquement conducteur étant connecté électriquement audit dispositif électrique (400), ledit deuxième connecteur (200) comprenant une deuxième pièce (210) en matière plastique et au moins un deuxième élément de contact (221, 222) électriquement conducteur, ledit au moins un deuxième élément de contact (221, 222) électriquement conducteur étant configuré pour être relié audit au moins un premier élément de contact (121, 122) électriquement conducteur, ladite première pièce (110) en matière plastique étant soudée le long d'un bord circonférentiel extérieur, qui est une courbe fermée (150) s'étendant autour dudit au moins un premier élément de contact (121, 122) électriquement conducteur, à une partie en matière plastique située à l'intérieur du réservoir (300),
**caractérisé en ce que** ladite deuxième pièce (210) en matière plastique comprend un bord circonférentiel extérieur (250) soudé à :
- un côté extérieur (360) dudit réservoir (300) entourant une ouverture de connecteur (330) ; ou
- le bord circonférentiel extérieur (150) de la première pièce (110) en matière plastique, la deuxième pièce (210) en matière plastique du deuxième connecteur (200) étant la partie en matière plastique située à l'intérieur du réservoir (300).

2. Le réservoir (300) selon la revendication 1, dans lequel la première pièce (110) en matière plastique est soudée le long d'une courbe fermée à la deuxième pièce (210) en matière plastique du deuxième connecteur (200), autour dudit au moins un premier (121, 122) et deuxième (221, 222) élément de contact électriquement conducteur.

3. Le réservoir (300) selon la revendication 2, dans lequel ledit premier connecteur (100) est relié audit deuxième connecteur (200) à l'intérieur dudit réservoir (300), et lesdits premier (100) et deuxième (200) connecteurs sont situés entièrement à l'intérieur du réservoir (300).

4. Le réservoir (300) selon l'une quelconque des revendications précédentes, dans lequel le dispositif électrique (400) comprend au moins un câble de connexion (131, 132), ledit au moins un câble de connexion (131, 132) ayant une extrémité qui est intégrée de manière étanche dans la première pièce (110) en matière plastique, et dans lequel ledit au moins un premier élément de contact (121, 122) électriquement conducteur est connecté électriquement à au moins un fil de connexion dudit au moins un câble de connexion (131, 132).

5. Le réservoir (300) selon l'une quelconque des revendications précédentes, dans lequel le dispositif électrique (400) a deux câbles de connexion (131, 132), et dans lequel le premier connecteur (100) comprend deux éléments de contact (121, 122) électriquement conducteurs connectés auxdits deux câbles de connexion (131, 132) à l'intérieur de la première pièce (110) en matière plastique.

6. Le réservoir (300) selon l'une quelconque des revendications précédentes, dans lequel ledit au moins un premier (121, 122) ou deuxième (221, 222) élément de contact électriquement conducteur comprend au moins une broche de connecteur, et dans lequel ledit au moins un deuxième (221, 222) ou premier (121, 122) élément de contact électriquement conducteur comprend au moins un bus de contact dimensionné pour recevoir ladite au moins une broche de connecteur.

7. Le réservoir (300) selon l'une quelconque des revendications précédentes, dans lequel la première pièce (110) en matière plastique comprend un premier élément de positionnement (140) entre ledit au moins un premier élément de contact (121, 122) électriquement conducteur et la courbe fermée (150), et la deuxième pièce (210) en matière plastique comprend un deuxième élément de positionnement (240) configuré pour coopérer avec ledit premier élément de positionnement (140) de telle sorte que le positionnement du deuxième connecteur (200) est guidé par les premier (140) et deuxième (240) éléments de positionnement.

8. Un procédé de connexion d'un dispositif électrique (400) dans un réservoir (300), comprenant :
- le fait de munir ledit dispositif électrique (400) d'un premier connecteur (100), ledit premier connecteur (100) comprenant une première pièce (110) en matière plastique et au moins un premier élément de contact (121, 122) électriquement conducteur étant connecté électriquement audit dispositif électrique (400) ;
- le fait d'assembler le réservoir (300) de telle sorte que ladite première pièce (110) en matière plastique adhère le long d'une courbe fermée (150) à une partie en matière plastique située à l'intérieur du réservoir (300) et de telle sorte qu'un deuxième connecteur (200) soit relié audit premier connecteur (100),
ledit deuxième connecteur (200) comprend une deuxième pièce (210) en matière plastique et au moins un deuxième élément de contact (221, 222) électriquement conducteur, ledit au moins un deuxième élément de contact (221, 222) électriquement conducteur étant relié audit au moins un premier élément de contact (121, 122) électriquement conducteur,
l'assemblage étant réalisé de telle sorte que ladite première pièce (110) en matière plastique est soudée le long d'un bord circonférentiel extérieur (150), qui est une courbe fermée s'étendant autour dudit au moins un premier élément de contact (121, 122) électriquement conducteur, à la partie en matière plastique située à l'intérieur du réservoir (300), et
**caractérisé en ce que**
ladite deuxième pièce (210) en matière plastique comprend un bord circonférentiel extérieur (250) soudé à :
- un côté extérieur (360) dudit réservoir (300) entourant une ouverture de connecteur (330) ; ou
- le bord circonférentiel extérieur (150) de la première pièce (110) en matière plastique, la deuxième pièce (210) en matière plastique du deuxième connecteur (200) étant la partie en matière plastique située à l'intérieur du réservoir (300).

9. Le procédé selon la revendication 8, dans lequel le premier connecteur (100) en matière plastique est fabriqué en surmoulant un câble de connexion avec la matière plastique, et en connectant ledit au moins un premier élément de contact (121, 122) électriquement conducteur à un fil de connexion du câble de connexion (131, 132).

10. Le procédé selon l'une quelconque des revendications 8 à 9, dans lequel l'assemblage du réservoir (300) comprend :
- le fait de lier par adhésion la première pièce (110) en matière plastique le long d'une courbe fermée sur un côté intérieur (350) d'une première coque de réservoir (310),
- le fait de lier par adhésion la première coque de réservoir (310) sur une deuxième coque de réservoir (320) de telle sorte qu'un réservoir (300) renfermant le dispositif électrique (400) soit formé, et
- le fait de relier le deuxième connecteur (200) au premier connecteur (100).
